Europäisches Patentamt

European Patent Office

Office européen des brevets

(19)

(11) Publication number: **0 233 583**
A1

(12)

# EUROPEAN PATENT APPLICATION

(21) Application number: 87101873.5

(22) Date of filing: 11.02.87

(51) Int. Cl.³: **F 16 H 1/45**

(30) Priority: 12.02.86 YU 198/86
29.12.86 YU 2266/86

(43) Date of publication of application:
26.08.87 Bulletin 87/35

(84) Designated Contracting States:
AT BE CH DE ES FR GB GR IT LI LU NL SE

(71) Applicant: Logonder, Pavle
Celesnikova 12
YU-61215 Medvode(YU)

(72) Inventor: Logonder, Pavle
Celesnikova 12
YU-61215 Medvode(YU)

(74) Representative: Füchsle, Klaus, Dipl.-Ing. et al,
Hoffmann . Eitle & Partner Patentanwälte Arabellastrasse
4
D-8000 München 81(DE)

(54) Differential making possible the locking of axle shafts.

(57) Differential making possible the locking of axle shafts, without the employment of complicated gear wheel and bearing arrangements which as two pairs of bevel gears and a pair of mutually mating worms, wherein onto two mutually parallel auxiliary shafts (5a,5b) that are incorporated into a two-piece yoke (3) that is constructed mirror-symmetrically with regard to the respective jointing plane (E), there are placed to the left and to the right of this jointing plane (E) and at equal distance thereof two equal, yet oppositely oriented one-piece assemblies consisting of a bevel gear (6a,6b), a worm (7a,7b) constructed for the limit of the self-locking and of a hub (8a,8b), with the bevel gear (6a,6b), mating a sleeve-type spur-bevel gear (9a,9b), whose axis is perpendicular to the jointing plane (E) and which spur-bevel gear (9a,9b) is journalled in a bearing hub (3a, 3b) of the yoke (3) and placed on a spline shaft (11a,11b) of a driving wheel shaft (10a,10b).

Fig. 1

EP 0 233 583 A1

## DIFFERENTIAL MAKING POSSIBLE THE LOCKING OF AXLE SHAFTS

The invention relates to a differential which makes possible the locking of axle shafts and comprises a driving shaft with a drive pinion mating an outer drive gear fastened to a yoke, in which yoke there are situated, crosswise to the driving shaft, two wheel axle shafts, all three shafts being journalled in a common housing, and the yoke is accompanied by an outer drive gear being rotatably positioned essentially on the wheel axle shafts.

From a US patent of 1958, which was referred to in the Yugoslavian magazine Življenje in tehnika (October 1984, p. 74 ff), it is known that the geometrical problem of rolling the driving wheels of a motor vehicle was solved by Vernon Gleasman in such a way that simultaneously there was obtained the function of locking the wheel axle shafts.

In order to realize the aforementioned function the shafts of the driving wheels are provided with cutting worm gears which are coaxial to each other and are situated in the gearing closely to each other. The helicoidal toothing, i.e. the helix, is unidirected, i.e. to the left or to the right at both cutting worm gears. Each of these cutting worm gears is mated by two gear wheels that are situated crosswise and tangentially to the circumference of the related cutting worm gear and are mutually connected as well as journalled in a yoke, which forms a part of a great spur bevel gear that is driven by the motor by means of a propeller shaft.

The disclosed construction contains a total of 16 gear wheels which, in combination with the bearing arrangements, represent a complicated embodiment, particularly when taking into account that the elements must not act self-locking "without need". As a whole, the differential is, in spite of the component parts being miniature, bigger than common differentials with bevel gears for a specified power. Besides, it is obvious that an extremely demanding machining technology is in question, which unavoidably leads to a high price.

It is the object of the invention to modify the above-described differential so as to obtain a differential for motor vehicles, which makes possible the locking of axle shafts without additional special constructional elements.

In a differential which consists of two pairs of bevel gears and of two mutually mating worms the above object is achieved according to the invention in that onto two mutually parallel auxiliary shafts, which are incorporated into the two-piece yoke that is constructed mirror-symmetrically with regard to the respective jointing plane, there are placed to the left and to the right of this jointing plane and at equal distances thereof two equal, yet oppositely oriented one-piece assemblies consisting of a bevel gear, a worm constructed for the limit of the self-locking, and of a hub, with the bevel gear mating a sleeve-type spur-bevel gear, whose axis is perpendicular to said jointing plane of the yoke and which spur-bevel gear is journalled in a bearing hub of the yoke and placed on a spline shaft of a driving wheel shaft of a vehicle.

In case the proposed solution could not resist large moments of rotation that sometimes occur, the above solution can be modified as follows.

Onto a series of mutually parallel shafts which are incorporated into the two-piece yoke that in its interior is constructed mirror-symmetrically with regard to the respective jointing plane, there are arranged in pairs, at equal radial distances from the two driving shafts, mutually identical, in each pair oppositely oriented one-piece assemblies of a spur gear, a worm constructed for the limit of the self-locking, and a hub, with the spur gear mating a further sleeve-like spur gear, whose axis is perpendicular to said jointing plane and which spur gear is journalled in a bearing hub of the yoke and placed onto the driving shaft.

The present invention will be more clearly understood from
the following description of two embodiments thereof, by way
of example, with reference to the accompanying drawings, in
which

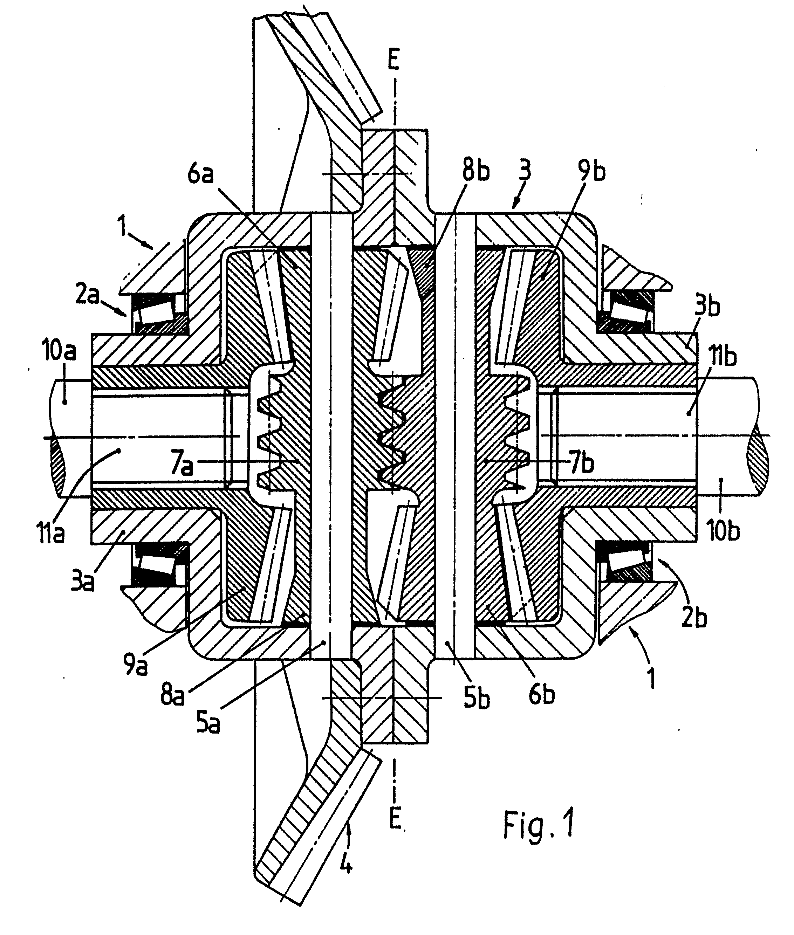

Fig. 1 is a longitudinal sectional view in the plane along
the driven shafts and auxiliary shafts,

Fig. 2 is a view analogous to Fig. 1, yet of a second embodiment,
and

Fig. 3 is a transverse sectional view taken along the line
III-III of Fig. 2.

A housing 1 of the gearing comprises an inlet, in the given
case for the driving pinion of a propelling shaft, which is
not shown in the drawing, as well as two outlets, which in
the given case are represented by two conical-roller bearings
2a,2b. In the bearings 2a,2b there is held a yoke 3 which
for manufacturing and assembling reasons is made of two
mutually symmetrical parts with a jointing plane E, situated
perpendicularly to the outlet shafts. On said yoke 3, from
the outside, there is fastened a spur bevel gear 4, which
mates the aforementioned pinion of the propelling shaft, not
shown in the drawing.

On the left and the right side of the jointing plane E and
at equal distances therefrom there are incoporated into the
yoke 3 two mutually parallel shafts 5a,5b, which are situated
in the plane of the driving shafts and onto which there is
placed on each of them a one-piece assembly of a bevel gear
6a,6b, a worm 7a,7b and a hub 8a,8b, the assembly of the
bevel gear 6a, the worm 7a and the hub 8a being equal to the
assembly of the bevel gear 6b, the worm 7b and the hub 8b,
said assemblies being oriented oppositely and the worms
7a,7b mating each other.

In each bearing hub 3a,3b of the yoke 3 there is inserted a
sleeve-type spur-bevel gear 9a,9b, which mates the bevel
gear 6a,6b, the inner bore of the spur-bevel gear 9a,9b is

- 4 -                    0233583

constructed as a spline bore, into which the end section of
the driving shaft 10a, 10b is inserted, which end section is
made as a spline shaft 11a,11b.

When mounted, the worms 7a,7b act as worms with a left and a
right helix, whose inclination is just on the limit of the
self-locking, which is determined, with regard to the
necessary power, by the size of the modulus and the diameter
of the worm.

The moment of rotation is transferred by the spur bevel gear 4
onto the yoke 3 of the differential and then by means of
corner bevel gears 6a,6b onto the side spur-bevel gears
9a,9b and hereby onto the driving shafts 10a,10b. Even if
one of the driving wheels of the vehicle were lifted or had
"lost" the rolling friction,         the moment of rotation
would be entirely transferred to the other wheel since
because of the self-locking of the worms 7a,7b on the bevel
gears 6a,6b and of the axial pressures as well as due to
the friction at the front surfaces, the spur-bevel gears
9a,9b would not rotate, which means that both wheels would
rotate with the same speed. Thereby the condition is fulfilled
that a single wheel cannot rotate but both wheels must
rotate simultaneously with the same speed, and the moment of
rotation is transferred to the road surface by both wheels,
depending on the friction of each single wheel.

In order to make possible the driving round a road curve,
which means that one wheel must overtake for exactly the
same extent as the other wheel must lag behind, and in
order to deliver the same moment of rotation simultaneously
to both wheels, the "inner" (with respect to the road curve)
worm (or the "outer" or both, resp., when they are simultaneously
driven from the opposite directions from the shaft by means
of corner bevel gears) is rotated for the necessary number
of degrees and thereby unloads the self-locking of the counter-
worm; thus the worm of the outer wheel can be moved for the
same amount of degrees.

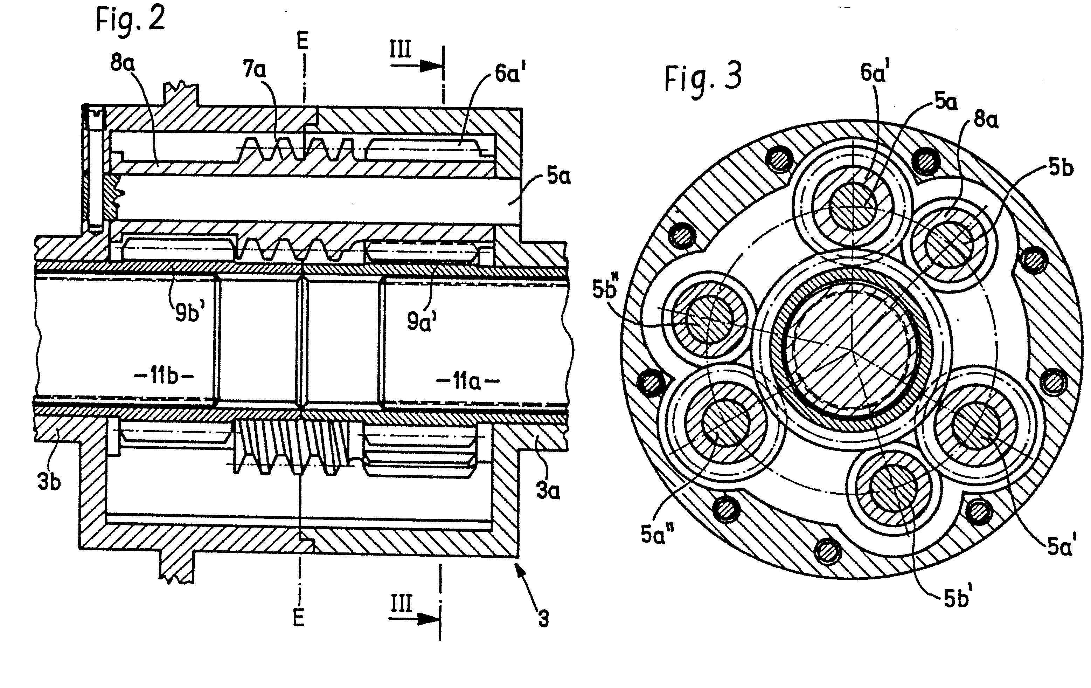

In the embodiment of Figs. 2-3, into the yoke 3 there are incorporated perpendicularly to the jointing plane E, i.e. parallel to the driving shafts, and at equal distances from said shafts in their radial planes, three mutually parallel pairs of auxiliary shafts 5a,5b; 5a', 5b'; 5a",5b", and onto each of them there is placed a one-piece assembly of a spur gear 6a', a worm 7a and a hub 8a, one assembly of the spur gear 6a', the worm 7a and the hub 8a being equal to the next assembly of each pair, said assemblies being oriented oppositely and the worms 7a mating each other.

In each bearing hub 3a,3b of the yoke 3 there is inserted a sleeve-type spur gear 9a', 9b', which mates the spur gears 6a'. The inner bore of the spur gears 9a', 9b' is constructed as a spline bore, into which the end section of the driven shaft is inserted, which end section is made as a spline shaft 11a,11b.

When mounted, the worms 7a of each pair act as worms with a left and a right helix.

The moment of rotation is transferred onto the yoke 3 of the differential and by means of spur gears 6a' onto the inner spur gears 9a', 9b' and hereby onto the driving shafts 11a,11b. Even if one of the driving wheels of the vehicle were lifted or had "lost" the rolling friction, the moment of rotation would be entirely transferred to the other wheel, since because of the self-locking of the worms 7a on the spur gears 6a', and of the axial pressures as well as due to the friction at the front surfaces the spur gears 9a',9b' would not rotate, which means that both wheels would rotate with the same speed.

**0233583**

CLAIMS:

. Differential making possible the locking of axle shafts,
with two pairs of bevel gears and a pair of mutually mating
worms, wherein onto two mutually parallel auxiliary shafts
(5a,5b) that are incorporated into a two-piece yoke (3) that
is constructed mirror-symmetrically with regard to the
respective jointing plane (E), there are placed to the left
and to the right of this jointing plane (E) and at equal
distance thereof two equal, yet oppositely oriented one-piece
assemblies consisting of a bevel gear (6a,6b), a worm (7a,7b)
constructed for the limit of the self-locking and of a hub
(8a,8b), with the bevel gear (6a,6b) mating a sleeve-type
spur-bevel gear (9a,9b), whose axis is perpendicular to the
jointing plane (E) and which spur-bevel gear (9a,9b) is
journalled in a bearing hub (3a,3b) of the yoke (3) and
placed on a spline shaft (11a,11b) of a driving wheel shaft
(10a, 10b).

. Differential making possible the locking of axle shafts, with
a series of pairs of spur gears and mutually mating worms,
wherein onto the mutually parallel shafts (5a,5b) which are
incorporated into the two-piece yoke (3) that, in its interior,
is constructed mirror-symmetrically with regard to the
respective jointing plane (E-E), there are placed in pairs,
perpendicularly to the jointing plane (E-E) and at equal
radial distances from the two driving shafts (11a,11b),
mutually identical, in each pair oppositely oriented one-piece
assemblies of a spur gear (6a'), a worm (7a) constructed for
the limit of the self-locking, and a hub (8a), with the spur
gear (6a') mating a further, sleeve-like spur gear (9a',9b'),
whose axis is perpendicular to the jointing plane (E-E) and
which spur gear (9a',9b') is journalled in a bearing hub
(3a,3b) of the yoke (3) and placed onto the driving shaft (11a,11b).

Fig. 1

0233583

Fig. 3

Fig. 2

European Patent Office

**EUROPEAN SEARCH REPORT**

0233583

EP 87 10 1873

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| P,X | FR-A-2 572 152 (FAUVARQUE)<br>* whole document * | 1 | F 16 H 1/45 |
| X | DE-B-1 169 245 (A. HILADO)<br>* whole document * | 2 | |
| A | US-A-2 898 778 (R.B. RANSOM)<br>* whole document * | 1 | |
| A | US-A-1 775 312 (W.D. HEAP)<br>* whole document * | 1 | |
| A | DE-C- 839 448 (J. MÜLLER)<br>* figure 1; claims * | 1 | |
| A | FR-A- 768 330 (H.L.M.J. DEPLACE)<br>* figure 3; page 3, lines 24-84 * | 2 | **TECHNICAL FIELDS SEARCHED (Int. Cl 4)**<br><br>F 16 H 1/00<br>B 60 K 17/00 |
| A | US-A-2 000 223 (L. DU PRAS) | | |

The present search report has been drawn up for all claims

| Place of search | Date of completion of the search | Examiner |
|---|---|---|
| BERLIN | 15-05-1987 | GERTIG I. |